# EUROPEAN PATENT APPLICATION

(11) **EP 2 140 792 A1**
(43) Date of publication of application: **06.01.2010**
(21) Application number: 09008367.6
(22) Date of filing: 26.06.2009
(51) Int. Cl.: A47J 45/06

(54) **Handle element, handle or handle cover for a kitchen utensil and kitchen utensil preferably provided with such a handle element**

(30) Priority: 01.07.2008 IT RM20080356
(71) Applicant: D'Anna, Salvatore, 00135 Roma (IT)
(72) Inventor: D'Anna, Salvatore, 00135 Roma (IT)

(57) **Abstract**

According to a first aspect, the present invention relates to a handle element for a kitchen utensil, which comprises at least one body (2) including a hook-shaped portion (3), at least one slot or groove (4) being formed at the hook-shaped portion (3), the at least one slot or groove comprising at least one receiving seat (4a) and at least one access opening (4b) to the at least one seat (4a).

According to another aspect, the present invention relates to a kitchen utensil comprising: at least one food container basin element (9) including at least one lateral wall (9a) substantially shaped as a solid of revolution around an axis of symmetry (x-x); at least one handle element anchored to the at least one container basin (9), the at least one handle element including at least one hook portion (3) delimiting a receiving seat (4a) substantially parallel to the axis of symmetry (x-x).

## Description

The present invention relates to a handle element, a handle or a handle cover for a kitchen utensil, and a kitchen utensil preferably provided with such a handle element.

Kitchen utensils such as pans, pots, or similar items provided with a grip or handle element or a handle, are placed, when not used, for example after being washed or in the period of time in which they are displayed in a shop, in suitable stands, drawers, shelves or racks.

Such utensils are sometimes stored in a substantially vertical position, especially after they have undergone a washing step, because this position facilitates dripping/straining and thus accelerates the drying step of the utensil.

Handles or handgrips for kitchen utensils, in which, and particularly at the free end thereof, a through hole is formed, have already been proposed; thanks to the hole, such utensils may be hung to a hook or a support rod which cantileveringly protrudes from a wall, e. g. a wall of a shop or of a kitchen of a house.

If a kitchen utensil, which is provided with a handle in which a hole is formed, should be hung/released on/from a hook, the utensil should be tilted, thereby inserting/estracting the hook in/from the hole, and to this end, of course, the area in front of the hook must be cleared. Moreover, during hanging/releasing steps of the utensil, the hook may be stressed, and, in the long run, this could cause the detachment of the hook from the wall.

If a plurality of utensils are hung on a support rod and a desired kitchen utensil is to be released from the support rod, the user should release first the utensils located (hung) between the desired utensil and the free end of the rod, and subsequently the desired utensil. This may cause a certain discomfort for the user, who, if he need to use just one utensil, would necessarily have to displace a plurality of utensils.

The main object of the present invention is therefore to provide a handle element for a kitchen utensil that can be hung/released to/from a support with greater ease and convenience compared to the handle elements proposed up to know.

Another object of the present invention is to provide a handle element that can be hung/released to/from a support without reducing the anchorage firmness of the support relative to a respective wall.

Another object of the present invention is to provide a kitchen utensil that can be hung/released to/from a support in a quick and easy way.

Another object of the present invention is to provide a kitchen utensil that can be hung/released to/from a support independently of other utensils hung to the same support.

According to a first aspect of the present invention, a handle element for a kitchen utensil is provided, which comprises at least one body including at least one hook-shaped portion, at least one slot or groove being formed at the at least one hook-shaped portion, the at least one slot or groove comprising at least one receiving seat and at least one access opening to the at least one seat.

According to another aspect of the present invention, a kitchen utensil is provided, which includes:
- at least one food container basin-element including at least one lateral wall substantially shaped as a solid of revolution around an axis of symmetry;
- at least one handle element anchored to the at least one container basin,
   the at least one handle element including at least one hook portion delimiting a receiving seat substantially parallel to the axis of symmetry.

Further aspects and advantages of the present invention will emerge better from the following detailed description of specific embodiments of a handle element, description made with reference to the drawing set, in which:
- Figures 1 and 2 are side and front views, respectively, of a handle element in accordance with the present invention;
- Figure 3 is a front view of a second embodiment of a handle element in accordance with the present invention;
- Figure 4 is a front view of a third embodiment of a handle element in accordance with the present invention;
- Figures 5 and 6 are plan and side views, respectively, of a utensil in accordance with the present invention, and
- Figure 7 is a perspective view of three utensils in accordance with the present invention hanging from a support rod.

In the drawing set, the same or equivalent parts or components were marked with the same reference numerals.

In the description of the present invention, with "cooking utensils" it is intended to indicate pans, pots, and the like comprising at least a basin portion, which is designed to contain food, and a handle.

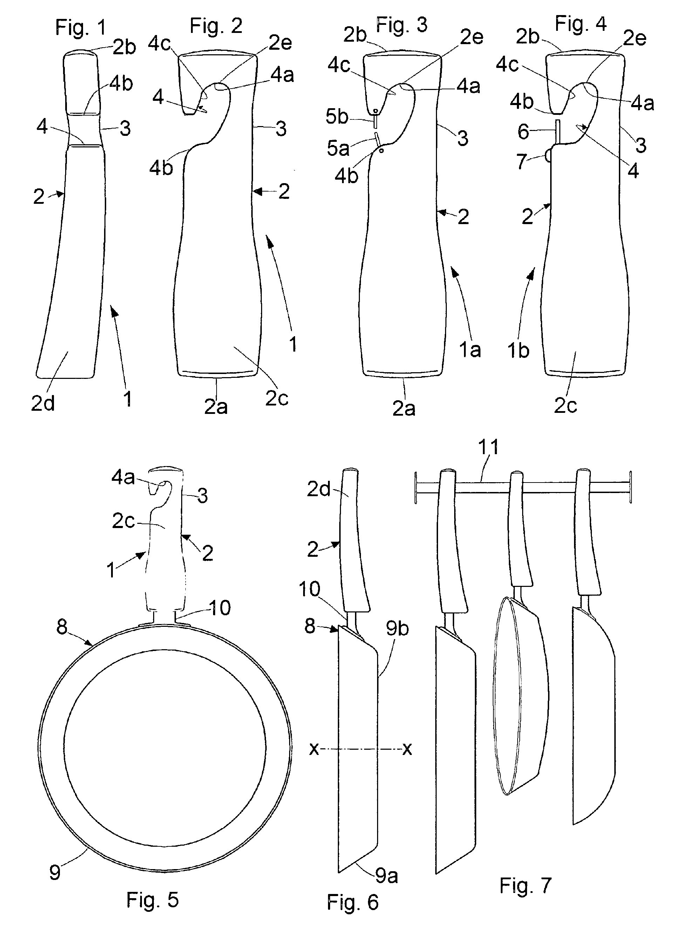

Referring first to Figures 1 and 2, a grip or handle element 1 for a kitchen utensil in accordance with the present invention is shown, which includes a body 2 provided with a hook-shaped portion 3. Particularly, at the hook-shaped portion 3 at least one slot or groove 4 is formed, which includes a receiving seat 4a and an access opening or mouth 4b to the receiving seat 4a. Preferably, the groove 4 further comprises a guide part 4c designed to allow for a hook or a support to be placed in the groove 4, the guide part being formed between the seat 4a and the access opening 4b. Advantageously, the access opening 4b has chamfered edge/s.

The body 2 comprises a base surface or a first end 2a designed to be, in use, proximal to a basin portion of a kitchen utensil, and a top surface or a second end 2b, that, in use, is distal from a basin portion of a kitchen utensil, and, preferably, the hook-shaped portion 3 is located at the second end 2b, whereas the seat 4a has a concavity at least partially facing towards the first end 2a.

Advantageously, the body 2 further includes a side surface connecting the base surface 2a to the top surface 2b, the side surface including a couple of bigger sized walls 2c, and a couple of smaller sized walls 2d, the walls of each couple being parallel and opposite one with respect to the other. The receiving seat 4a extends preferably from one bigger sized wall 2c to the other bigger sized wall 2c, whereas the access opening 4b is formed at one smaller sized wall 2d. More preferably, the distance between receiving seat 4a and top surface 2b is smaller than the distance between the access opening 4b and the top surface 2b.

If such handle element 1 should be hung to a hook or a rod, it will be enough to bring it at and with its access opening 4b facing the hook/rod, and then to approach the handle element to the hook/rod, and subsequently to displace the handle element, thereby causing the hook/rod 4 to be inserted into the groove 4 until it (the hook/rod) is located in the receiving seat 4a and in abutment with a top, when in use, and inner edge 2e of the body 2.

If a handle element should be released from a hook/rod, it will suffice to displace the element in a manner reverse with respect to the above-mentioned steps.

According to another embodiment of the present invention, the handle element includes a spring catch element designed to engage the access opening 4b.

In Figure 3 a handle element has been shown, which includes a spring catch element comprising one or more pin or pivot elements articulated at the access opening 4b, thus the pivots or pins can rotate between an opening position and a closing position of the access opening. Preferably, the handle element includes two pivots: one pivot 5a is articulated at a portion that, when the handle element is hung to a hook/rod, is at a lower area of the access opening 4b, whereas the other pivot 5b is articulated at a higher area of the access opening 4b. The pivots can be elastically loaded, thus, when they are not biased, they remain in a predetermined position of equilibrium and, from the position of equilibrium, they can be caused to rotate in one direction only.

According to the embodiment shown in Figure 3, the pivots 5a, 5b are articulated to the body 2, thus they can rotate, from the closing position of equilibrium (shown in Figure 3) in a clockwise direction only.

Whether a handle element 1a should be hung to a hook/rod, one should bring the element at the hook/rod, with the access opening 4b facing, preferably, at the lower portion thereof, the hook/rod. Subsequently, the handle is caused to be approached to the hook/rod, while the lower portion of the access opening 4b and hook/rod are kept substantially aligned, thus the hook-rod abuts against the pivot 5a, thereby controlling the clockwise rotation of the pivot 5a from the closing position to the opening position of equilibrium; subsequently the handle element 1a will be further displaced until the hook/rod will abut against the top inner edge 2e.

If the handle element 1a should be released from the hook/rod, one will control a displacement of the handle element so as to bring the hook/rod in abutment with the pivot 5b, which will then be caused to clockwise rotate, thereby disengaging the access opening and allowing to estract the hook/rod from the groove 4 and then to release the handle element.

Referring now to Figure 4, it shows a handle element 1b including a spring catch element comprising a stem 6 slidingly mounted at the access opening 4b; the sliding motion of the stem can be controlled, for example, by means of a control button 7 suitably mechanically connected to the stem 6.

Whether a handle element 1b should be hung/released to/from a hook/rod, one will control the retraction of the stem 6, thus at least partly releasing the access opening and then the steps above-mentioned with reference to the handle element 1a, will be repeated.

It will be undestood that a handle element 1a or 1b may be firmly anchored to a hook/rod, thus reducing the possibility of undesired unhookings or releases of the handle element; the unhookings could be, for example, caused by a child who accidentally hits the handle element or by a user grasping a utensil hung close to the handle element.

A handle element 1, 1a or 1b can be used as a handle for a kitchen utensil, or as a cover for a handle of kitchen utensil, and if this is the case, the body 2 is hollow, thus it can be mounted on the handle or a portion of a handle or grip of a utensil.

With reference to Figures 5 and 6, a kitchen utensil 8 (a pan) is shown, which includes:
- one food container basin element 9 comprising a lateral wall 9a substantially shaped as a solid of revolution about an axis of symmetry x-x; and
- one handle element anchored to the container basin ,
   the handle element including at least one hook portion delimiting a receiving seat 4a substantially parallel to the axis of symmetry x-x.

A kitchen utensil in accordance with the present invention may be, for example, equipped with a handle element 1, 1a or 1b.

In particular, the kitchen utensil 8 includes a handle portion 10 fixed, e. g. welded to the lateral wall 9a of the container basin element 9, the handle element 1 being mountable on the handle portion 10.

The pan may also include a base wall 9b, the lateral wall 9a extending from one edge of the base wall, but a person skilled in the art will understand that the lateral wall 9a may be shaped in a different way, for example as a hemisphere.

If the handle element includes a couple of bigger-sized walls 2c, and a couple of smaller-sized walls 2d, the base wall 9b is advantageously substantially parallel to the couple of smaller-sized walls 2d.

In Figure 6, a plurality of kitchen utensils in accordance with the present invention are shown, which are hung to the same support rod 11. It will be undestood that each tool can be released from the rod 11 independently of the others, and thanks to the hook-shaped portion 3 having a receiving seat substantially parallel to axis of symmetry x-x, to the same support a plurality of utensils having axis of symmetry substantially parallel one with respect to the other and to the support rod, may be hung. This is particularly useful, when the height of the lateral walls 9a is much lower than the diameter of the base wall 9b.

If a plurality of kitchen utensils is anchored to the rod, each utensil having its axis of symmetry x-x orthogonal to the support rod, the distance between adjacent tools should be much bigger (depending upon the diameter of walls 9b) and the utensils would occupy a much larger hindrance than a utensil as shown in Fig 5.

A kitchen utensil in accordance with the present invention, due to the hook portion, can also be hung to a shaft having both its ends fixed/anchored to respective support walls (e. g. a kitchen furniture), whereas utensils proposed up to know can be hung only to a rod or hook cantileveringly extending from a wall and therefore having one free end.

A person skilled in the art will also undestand that a handle element 1, 1a and 1b, although it has a hook portion, can be easily gripped by a user, thanks to the fact that the hook portion is formed in the body 2 and therefore has neither protruding nor sharp parts. Bearing also in mind that the access opening 4b is designed to allow for the passage of a support hook or rod, it will be understood that the access opening can be sized so as to be much smaller than a finger of a user, thus preventing that a finger of a user is stuck in the groove 4.

The above-described handle element is susceptible to numerous modifications and variations within the protection scope as defined by the claims.

Thus, for example, a handle element may be provided with several hook portions, or with means for stiffening the handle element at the hook portion/s, e. g. a metal or similar parts.

## Claims

1. A handle element for a kitchen utensil, **characterized in that** it comprises at least one body (2) including a hook-shaped portion (3), at least one slot or groove (4) being formed at said hook-shaped portion (3), said at least one slot or groove comprising at least one receiving seat (4a) and at least one access opening (4b) to said at least one seat (4a).

2. A handle element as claimed in claim 1, **characterized in that** said groove comprises a guide part (4c) designed to allow for a hook or a support to be placed in said slot (4), said guide part being formed between said at least one seat (4a) and said at least one access opening (4b).

3. A handle element as claimed in claim 1 or 2, **characterized in that** it comprises at least one spring catch element (5a, 5b; 6, 7) designed to be placed at said access opening (4b).

4. A handle element as claimed in claim 3, **characterized in that** said at least one spring catch element comprises at least one pivot element (5a, 5b) articulated at said at least one access opening (4b).

5. A handle element as claimed in claim 3, **characterized in that** said spring catch element includes at least one stem (6) slidingly mounted at said access opening (4b).

6. A handle element as claimed in any previous claims, **characterized in that** said body (2) is hollow.

7. A handle element as claimed in any previous claims, **characterized in that** said at least one hook portion (3) is located at one end of said handle element (1, 1a, 1b).

8. A handle element as claimed in any previous claims, **characterized in that** said body (2) comprises a base surface or a first end (2a) designed to be, in use, proximal to a basin portion of a kitchen utensil, and a top surface or a second end (2b), that, in use, is distal from a basin portion of a kitchen utensil, whereas said seat (4a) has a concavity at least partially facing towards said first end (2a).

9. A handle element as claimed in claim 8, **characterized in that** it includes a side surface connecting said base surface (2a) to said top surface (2b), said side surface including a couple of bigger sized walls (2c), and a couple of smaller sized walls (2d), the walls of each couple being parallel and opposite one with respect to the other, and **in that** said receiving seat (4a) extends preferably from one wall of said couple of bigger sized walls (2c) to the other wall of said couple of bigger sized walls (2c), while said access opening (4b) is formed at one wall of said couple of smaller sized walls (2d).

10. A kitchen utensil **characterized in that** it comprises:
- at least one food container basin element (9) including at least one lateral wall (9a) shaped as a solid of revolution around an axis of symmetry (x-x); and
- at least one handle element as claimed in any claims 1 to 9, which is anchored to said at least one container basin (9).

11. A utensil as claimed in claim 10, including a handle element as claimed in claim 9,
**characterized in that** said container basin includes a base wall (9b), said lateral wall (9a) extending from one edge of said base wall (9b), and said base wall (9b) is substantially parallel to said couple of smaller sized walls (2d).

12. A utensil as claimed in claim 10 or 11, **characterized in that** it includes a handle portion (10) fixed to said lateral wall (9a) of said container basin element (9), said handle element being mountable on said handle portion (10).

13. A kitchen utensil **characterized in that** it comprises:
- at least one food container basin element (9) including at least one lateral wall (9a) substantially shaped as a solid of revolution around an axis of symmetry (x-x);
- at least one handle element anchored to said at least one container basin (9),
**characterized in that** said at least one handle element includes at least one hook portion (3) delimiting a receiving seat (4a) substantially parallel to said axis of symmetry (x-x).

14. A utensil as claimed in claim 13, **characterized in that** it includes a handle element as claimed in any claim 1 to 9.
